(19) **Europäisches Patentamt**
**European Patent Office**
**Office européen des brevets**

(11) Publication number: **0 050 020**
**A2**

(12) # EUROPEAN PATENT APPLICATION

(21) Application number: **81304704.0**

(22) Date of filing: **09.10.81**

(51) Int Cl.³: **C 08 J 3/24**
**C 08 L 61/06, C 08 J 5/24**

(30) Priority: **09.10.80 GB 8032621**

(43) Date of publication of application:
**21.04.82 Bulletin 82 16**

(84) Designated Contracting States:
**BE DE FR GB NL**

(71) Applicant: BP Chemicals Limited
Belgrave House 76 Buckingham Palace Road
London, SW1W 0SU(GB)

(72) Inventor: Ashford, Paul Keith
BP Chemicals Limited Hayes Road Sully
Penarth South Glamorgan, CF6 2YU(GB)

(72) Inventor: Forsdyke, Kenneth Leonard
BP Chemicals Limited Hayes Road Sully
Penarth South Glamorgan CF6 2YU(GB)

(74) Representative: Ryan, Edward Terrence et al,
BP INTERNATIONAL LIMITED Patents and Licensing
Division Chertsey Road
Sunbury-on-Thames Middlesex, TW16 7LN(GB)

(54) **Cold set phenolic resins.**

(57) Cold set phenolic resins are cured by the action of a substance which hydrolyses to give a strong acid.

EP 0 050 020 A2

Croydon Printing Company Ltd

1

## COLD SET PHENOLIC RESINS

The present invention relates to cold set phenolic resins, i.e. resins which cure to solids at ambient temperatures.

Most phenolic resins are cured by heating. However there is a demand for phenolic resins which can be cured at normal ambient temperature e.g. 15-30°C. Such cold set resins are used for example in the production of glass reinforced phenolic resins, for example by hand lay up processes in which liquid phenolic resin is manually applied to layers of glass fibre on a mould.

It is desirable to obtain a reasonably short setting time so that the moulded product can be removed from the mould after a comparatively short time allowing reuse of the mould. It is known to use strong acid catalyst e.g. mixtures of p-toluene sulphonic acid/phosphoric acid, to obtain a short setting time. However these mixtures give a very short pot life. The pot life is the time during which the phenolic resin mixture containing the acid catalyst can be worked before becoming too viscous. If the concentration of acid catalyst is reduced to increase pot life the cure time becomes excessively long.

According to the present invention the process for curing a cold set phenolic resin containing 4 to 25% wt/wt of water by the action of an acid catalyst comprises adding to the phenolic resin a hydrolysable substance which hydrolyses in the phenolic resin to give a strong acid at a rate which is slow relative to the curing reaction.

Those skilled in the production of phenolic resins will be aware of suitable phenolic resins for use in cold setting processes. Examples of suitable phenolic resins are phenol-formaldehyde resins.

1

These are normally resol resins having a formaldehyde/phenol mole ratio of greater than 1:1. While such resins may be produced over a wide range of formaldehyde/phenol mole ratios, the preferred materials are made using a formaldehyde/phenol mole ratio of between 1.4:1 and 1.8:1. The resins must be liquid at ambient temperature and when used to make fibre reinforced products, the viscosity is desirably sufficiently low to give good wetting of the fibre reinforcement. Typical resins have a viscosity in the range 100 to 2000 cps at 20°C, more preferably in the range 350 to 800 cps.

The final pH of the resin before use is preferably in the range 6-8.

The water content of the resin is in the range 4 to 25% wt/wt, more preferably in the range 8-15% wt/wt. A typical value is 10-12% wt/wt.

The hydrolysable substance added to the phenolic resin is one which hydrolyses at ambient temperatures to give a strong acid. By "strong acid" we mean an acid which is substantially dissociated in N/10 aqueous solution at ambient temperature.

The acid is preferably substantially completely dissociated. Examples of suitable acids are aryl sulphonic acids and HCl

The hydrolysable substance is one which hydrolyses in the phenolic resin at a rate which is slow relative to the for the curing reaction at the setting temperature. The rate of hydrolysis is taken to be slow relative to the curing reaction if for a given quantity of hydrolysable material the pot life of the phenolic resin is at least twice, more preferably at least five times, most preferably at least ten times the pot life of the same resin into which is introduced a quantity of strong acid or acids equivalent to that produced by the complete hydrolysis of the hydrolysable material.

Several classes of material for example esters and acid chlorides are known to hydrolyse to acids.

However particularly preferred hydrolysable materials are the aromatic sulphonyl chlorides. These hydrolyse to give an aromatic sulphonic acid and hydrogen chloride. In order to obtain a uniform dispersion of hydrolysable material in the phenolic resin it is highly desirable for the aromatic sulphonyl chloride to be a liquid which dissolves readily in the resin. A particularly preferred hydrolysable material is benzene sulphonyl chloride.

The quantity of hydrolysable substance must of course be sufficient to fully cure the phenolic resin after hydrolyis has taken place.

The quantity of hydrolysable material used may for example be in the range 4 to 15% by weight based on the weight of resin.

The invention will now be illustrated by reference to the following Examples.

Example 1

A cold set phenolic resin was prepared by the alkaline condensation of phenol and formaldehyde at a molar ratio of formaldehyde to phenol greater than 1:1 to give a product with the following properties after neutralisation.

| | |
|---|---|
| Viscosity (25°C) | 500-600 (cSt) |
| Free formaldehyde | 2.0-2.5% wt/wt |
| Specific gravity (25°C) | 1.240-1.250 g ml$^{-1}$ |
| Solids content at 135°C | 67-69% |
| Hardening time at 130°C | 9-12 min. |
| pH | 7.5-8.0 |
| Water content | 10-12% wt/wt |

Varying concentrations of benzene sulphonyl chloride were mixed into the resin mixture, and the pot life and time for curing at ambient temperature (20-23°C) determined for the various samples.

The results are given in the Table.

Comparative Test A

The same phenolic resin was used as in Example 1. Instead of benzene sulphonyl chloride varying quantities of a conventional acid catalyst viz.were added to samples of resin. Pot life and cure times obtained are given in the Table.

| Concentration (%) | Acid Catalyst | | Benzene Sulphonyl Chloride | |
|---|---|---|---|---|
| | Pot Life (min) | Cure Time (h) | Pot Life (min) | Cure Time (h) |
| 8 | 10 | 12 | 24 | $7\frac{1}{2}$ |
| 7 | 14 | 14 | 26 | 8 |
| 6 | 18 | 16-17 | 28 | $9\frac{1}{4}$ |
| 5 | 27 | not determined | 32 | $10\frac{1}{2}$ |
| 4 | 60 | Does not cure fully | 39 | 12 |

Pot life was determined by mixing the resin and the catalyst at 20°C. The time required for the onset of opacity was taken as the pot life.

The cure time was the time required for a 3 ply glass/resin composite of resin to glass ratio 2:1 by weight to be hard and releasable from a glass sheet (previously treated with release agent) at ca. 23°C.

Example 2

A typical* cold set phenol/formaldehyde resin was prepared and the pot life determined at 21°C for mixtures containing the varying quantities of benzene sulphonyl chloride as given in Table 2.

Comparative Test B

In a comparative experiment not according to the invention the resin used in Example 2 was mixed with quantities of benzene sulphonic acid and hydrogen chloride equivalent to these which would be produced by complete hydrolysis of the quantities of benzene sulphonyl chloride used in Example 2.

*(10-12% wt/wt water)

Table 2

Example 2                                    Test B

Quantity of
benzene
sulphonyl
chloride

| % wt | Pot Life | Pot Life |
| --- | --- | --- |
| 4 | 52 minutes | 3 minutes 9 sec. |
| 5 | 45 " | 1 minute 54 sec. |
| 6 | 38 " | 1 minute 30 sec. |
| 7 | 36 " | 1 minute 12 sec. |
| 8 | 34 " | 58 sec. |

The hydrolysable substances are hydrolysed by the phenolic resin. The phenolic resin is most desirably substantially free from any substantial quantity of added acid or alkaline material. The addition of acids will undesirably increase the rate of hydrolysis of the hydrolysable substance and may also itself catalyse the setting reaction. Any such additional catalysis must be avoided. The hydrolysable substance must be essentially the sole catalyst used. The addition of alkalis will also undesirably increase the rate of hydrolysis.

Claims:

1. A process for curing a cold-set phenolic resin containing 4 to 25% wt/wt of water by the action of an acid catalyst comprises adding to the phenolic resin as essentially the sole catalyst a hydrolysable substance which hydrolyses in the phenolic resin to give a strong acid at a rate which is slow relative to the curing reaction.

2. A process according to Claim 1 wherein the hydrolysable substance is an aromatic sulphonyl chloride.

3. A process according to Claim 2 wherein the hydrolysable substance is benzene sulphonyl chloride.

4. A process according to any one of the preceding claims wherein the quantity of hydrolysable material is in the range 4 to 15% by weight based on the weight of the resin.

5. A process according to any one of the preceding claims wherein the phenolic resin is a phenol formaldehyde to phenol ratio greater than 1:1.

6. A process according to any one of the preceding claims wherein the resin contains fibrous reinforcement.

7. A process according to any one of the preceding claims wherein the resin is used to form shaped articles in a mould.